# EUROPEAN PATENT SPECIFICATION

(11) **EP 2 773 190 B1**
(45) Date of publication and mention of the grant of the patent: **07.11.2018**
(21) Application number: 12846694.3
(22) Date of filing: 30.10.2012
(51) Int. Cl.: A01K 63/04

(54) **DEVICE FOR A LAND-BASED AQUACULTURE FARM**
VORRICHTUNG FÜR EINE AQUAKULTURFARM AUF LAND
DISPOSITIF POUR FERME D'AQUACULTURE BASÉE À TERRE

(30) Priority: 01.11.2011 NO 20111488
(43) Date of publication of application: 10.09.2014
(73) Proprietor: Sogn Aqua AS, 5962 Bjordal (NO)
(72) Inventor: BREKKE, Jan Arne, 5303 Follese (NO); HESS-ERGA, Ole-Kristian, 5019 Bergen (NO)
(74) Representative: Håmsø Patentbyrå AS
(86) International application number: PCT/NO2012/050210
(87) International publication number: WO 2013/066188

(56) References cited:
- WO-A1-85/01858
- WO-A1-2004/093534
- DE-A1- 19 521 037
- DE-A1- 19 847 027
- GB-A- 1 592 085
- JP-A- H11 318 270
- JP-Y- S4 416 710

## Description

The invention concerns a land-based aquaculture farm for aquatic organisms. More particularly, the invention concerns a longitudinal flow installation, wherein the water is re-circulated in order to save energy. It is described that the longitudinal flow installation is provided with a return conduit which, in an inlet portion and an outlet portion thereof, is provided with a submerged, organism-excluding element.

Farming of aquatic organisms onshore takes place in vessels of various shapes. In context of farming anadromous fish, such as salmon (*Salmo salar*) and rainbow trout (*Oncorhynchus mykiss*), it is customary for alevins and smolt, when in the freshwater phase, to be bred in circular vessels and in vessels having a substantially square bottom. Replacement water is supplied tangentially along the outer wall of the vessel, whereby a circular flow is generated in the vessel. The advantage thereof is that faeces and uneaten feed is gathered in the direction of the centre of the vessel where it may be drained off. It is desirable for the vessel to be self-cleaning to the largest extent. Normally, the vessels are comprised of a plastics material. In order to ensure that there is sufficient oxygen in the water, oxygen or air may be supplied to the vessel through insufflation in a suitable pipe system. It is also known to re-circulate the water, especially if the water is heated or if there are restrictions with respect to the amount of water from the water source. In context of re-circulation, faeces and feed residues are removed in a filter, whereas dissolved nitrogen compounds and phosphorous compounds may be removed in so-called biological filters. Oxygen or air may be supplied to the water before being returned to the vessel. It is also known to supply liquid oxygen to the water.

From farming of so-called portion trout, i.e. rainbow trout weighing approximately 200 grams, it is known, in Europe, to use dams and so-called raceways. Normally, the raceways are comprised of cast concrete. It is customary to allow the water to flow in a laminar manner through the raceway from the inlet to the outlet. The water is conducted from the outlet and onwards to a waterway. It is customary to increase the oxygen level in the water by admixing air.

Patent publication WO 2004/093534 shows an endless raceway being oval or loop-shaped. The water is forced around in the raceway by means of unspecified flow generators. Patent publication GB 1592085 shows an oval vessel. By inserting an oblong venting chamber in the mid-line of the vessel, an endless raceway is formed. The venting chamber extends vertically from the bottom of the vessel and to the water surface where it projects somewhat above the water surface. The bottom portion of the venting chamber is provided with openings through which water may flow into the venting chamber from the surrounding raceway and, in the top portion thereof, it is provided with openings through which water may discharge to the surrounding raceway. A diffuser for air is positioned in the lower portion of the venting chamber. A gas lift will arise upon supply of air, causing water from the bottom portion of the venting chamber to flow vertically up to the openings through which it discharges from the venting chamber.

Patent publication DE 19521037 shows a tank for growing fish. The tank is formed with an inlet for water at one end and an outlet for water at an opposing end. Water is transported in return from the outlet to the inlet in an external conduit or from the outlet of one tank to the inlet of an adjacent tank. Patent publication DE 19847027 also shows a tank for growing fish. The tank is formed with an inlet for water at one end and an outlet for water at an opposing end. A return conduit is positioned outside the tank. A mammut pump provides circulation of the water. Patent publication JP S4416710 also shows a tank for growing fish. The tank comprises a water inlet at one side and several drain pipes are positioned in the centre of the tank. The water flow from the inlet creates a flow of circulating water in the tank. The water flow within the tank is not laminar due to, among other things, the drain pipes which create turbulence in the water flow.

It is known, from raceways onshore, that the water flow should be sufficiently strong for faeces and uneaten feed to be transported to the outlet of the raceway to be gathered there. If faeces and uneaten feed are allowed to sediment along the bottom of the raceway, the water quality will be poor due to bacterial decomposition of the material. It is an extensive maintenance operation to remove this material. Sufficient water flow requires a certain amount of water per time unit. If the water in the raceway is seawater, a significant pumping capacity is required to provide the raceway with sufficient water. A known disadvantage associated with farming of marine organisms onshore is the energy cost of lifting the seawater up to the farming vessel. It is therefore desirable to re-circulate the seawater in context of land-based farming of marine organisms.

A known disadvantage associated with farming of aquatic organisms onshore relates to the problems arising in context of failures in the electric power supply. Without electric power, the pumps stop and hence the supply of oxygen-rich water. Over time the organisms will consume the oxygen in the still water and will die from oxygen deficiency. This problem may be solved by installing an emergency power unit.

Raceways onshore provide some advantages for farming of bottom dwelling fish, for example halibut (*Hippoglossus hippoglossus*). All fish in the raceway will experience a constant flow. The area in the raceway is utilized properly, and a raceway provides a good utilization of the plot area. A raceway may also be sectioned using transverse, water flow-through grates, whereby several groups of aquatic organisms may be kept separately in the same raceway.

In context of supplying pressurized air to the water in order to increase the oxygen content of the water, super saturation of nitrogen gas is known to take place. Such super saturation may be lethal to aquatic organisms. It is therefore customary for the water to be degassed to allow the surplus nitrogen gas to be liberated from the water. Such degassing may be carried out in negative pressure aerators within which gas is stripped from the water, or in cascade aerators, or by respite of the water, or by allowing the water to have a large surface-volume ratio for a period, whereby the nitrogen gas quickly may diffuse out of the water.

In the following, a raceway implies a basin or a receptacle for farming of aquatic organisms, wherein the length of the basin exceeds the width of the basin by a factor of 2 or more. Further, the raceway is arranged in a manner allowing the water to flow substantially in a laminar manner from one short end of the raceway and onwards to the opposite short end. The end portions of the raceway may be formed with rounded corners, or the end portions may be rounded.

In the following, aquatic organisms imply marine organisms and limnetic organisms, for example fish, crustaceans, molluscs and echinoderms.

The object of the invention is to remedy or to reduce at least one of the disadvantages of the prior art, or at least to provide a useful alternative to the prior art.

The object is achieved by virtue of features disclosed in the following description and in the subsequent claims.

The invention concerns a longitudinal flow installation for farming of aquatic organisms onshore. The longitudinal flow installation comprises a raceway, wherein the water flow is substantially laminar. The aquatic organisms are bred in the raceway. A return conduit, which is open towards the ambient atmosphere, extends from the outlet portion of the raceway and onwards to the inlet portion of the raceway. The water is pumped around in the longitudinal flow installation by means of an ejector pump. The ejector is operated by means of a pump providing the ejector with fresh water or a mixture of fresh water and water being pumped from the raceway. The ejector is placed in the return conduit in such a manner that the ejector establishes a water flow in the return conduit in the direction of the inlet portion of the raceway. The ejector is provided with an induction opening facing the atmosphere, whereby air is mixed into the water in the return conduit. The return conduit is sufficiently wide and sufficiently long for surplus nitrogen gas and carbon dioxide to diffuse out of the water and into the atmosphere before the water is conducted into the raceway at the inlet portion thereof. The raceway, in the outlet portion thereof, is provided with a so-called monk forming a spillway for the water in the longitudinal flow installation. Faeces and uneaten feed are removed from the longitudinal flow installation in the same monk. Besides the pump, which pumps water to the ejector, the longitudinal flow installation is characterized in that there are no movable parts. The distinctive characteristic of the invention is that the return conduit is disposed in the raceway, whereby the building area or footprint of the longitudinal flow installation does not increase relative to the footprint of the raceway. By so doing, the invention provides a raceway with a laminar water flow and a high replacement rate for the water, where the water re-circulates with a low energy consumption, where the water is rich in oxygen and is aerated, and where the maintenance requirement is low.

The longitudinal flow installation may be supplied replacement water from a water reservoir located higher up than the longitudinal flow installation. The pressure difference between the water reservoir and the longitudinal flow installation may be used to supply replacement water to the ejector. By so doing, the installation may be operated without electric power for periods, and it is not necessary to invest in an emergency power unit. The water reservoir may contain freshwater, brackish water or seawater. This also offers the advantage of allowing the reservoir to be filled with, for example, seawater at times of the day where the price of electric power is at the lowest. This will reduce the total energy costs. If the replacement water is comprised of freshwater, a water inlet directly from a river or a dam may be an alternative.

In a first aspect, the invention more specifically concerns a longitudinal flow installation for farming of aquatic organisms, according to claim 1, wherein the longitudinal flow installation comprises a raceway; wherein the raceway is structured to be filled with water for allowing aquatic organisms to be accommodated; wherein the raceway comprises an inlet portion for water and an outlet portion for water wherein the water flow is substantially laminar between the inlet portion and the outlet portion, and the outlet portion is provided with a first drain for the water; the longitudinal flow installation is provided with a fluid supply for allowing oxygen to be supplied to the water, and wherein the longitudinal flow installation is further provided with at least one return conduit for circulation of the water in the raceway, wherein the return conduit, in an inlet portion and an outlet portion thereof, is provided with a submerged, water flow-through and organism-excluding element, wherein the return conduit is positioned between the sidewalls of the longitudinal flow installation, and wherein a water surface in the return conduit substantially is at a level of a water surface in the raceway.

The return conduit may float in the water of the raceway.

The water surface in the return conduit may be open towards the ambient atmosphere. In an alternative embodiment, the return conduit may be closed, and wherein a gas pressure above the water surface in the return conduit may be lower than or equal to the ambient pressure.

One side face of the return conduit may be fixed, in a fluid-tight manner, to one of the sidewalls of the longitudinal flow installation.

The return conduit may be provided with a flow generator. The return conduit may be provided with an ejector to establish a water flow in the return conduit. The ejector may be provided with an air inlet to supply air to the water. The return conduit may be provided with a supply of gas. The return conduit may be provided with an inlet for replacement water. The return conduit may be provided with a gas-evacuating ejector. The first drain may comprise a monk.

The return conduit, in an outlet portion thereof, may be provided with a skimmer structured in a manner allowing it to conduct surface material to a second outlet. The raceway, in the inlet portion thereof, may be provided with at least one deflection plate for generation of the laminar water flow in the raceway.

The organism-excluding element may be chosen from a group comprising a perforated cloth, a perforated plate, a net, a netting, a grate and a grating.

Hereinafter, an example of a preferred embodiment is described and is depicted in the accompanying drawings, where:
- Fig. 1: shows a perspective view, as seen from above, of a longitudinal flow installation according to the invention;

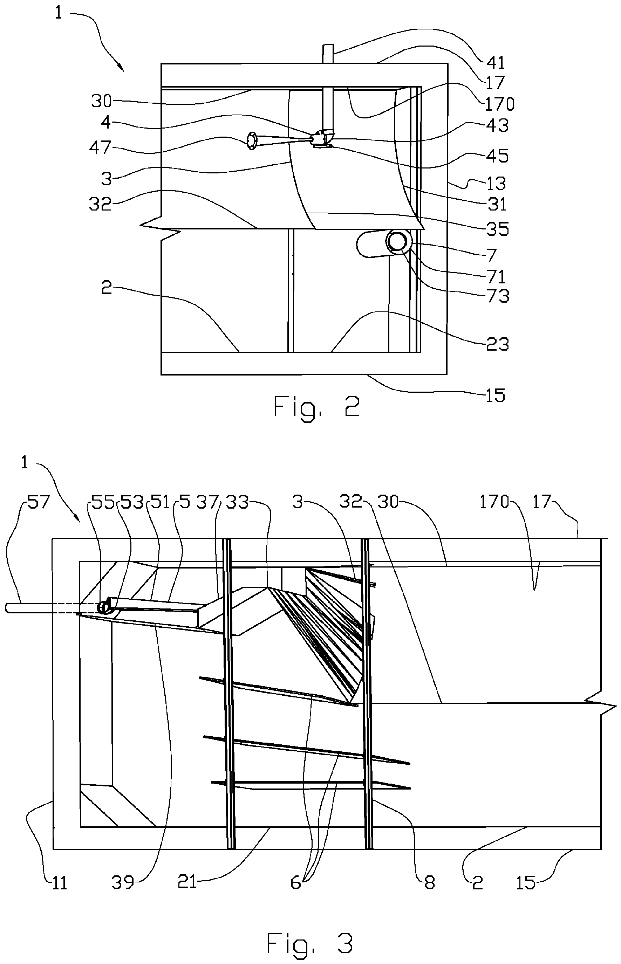

- Fig. 2: shows, in larger scale, a perspective view, as seen from above, of an outlet portion of the raceway and an inlet portion of the return conduit;
- Fig. 3: shows, in the same scale as that of Figure 2, a perspective view, as seen from above, of an inlet portion of the raceway and an outlet portion of the return conduit;
- Fig. 4: shows, in a different scale, a perspective view as seen from the side of the outlet portion of the raceway and the inlet portion of the return conduit;
- Fig. 5: shows, in yet another scale, a perspective view as seen from the side of the outlet portion of the raceway and the inlet portion of the return conduit, and rotated 90° relative to Figure 4;
- Fig. 6: shows, in yet another scale, a perspective view of the inlet portion of the raceway, and of a skimmer positioned in the outlet portion of the return conduit;
- Fig. 7: shows, in yet another scale, a schematic perspective view of a longitudinal flow installation in an alternative embodiment having two return conduits; and
- Fig. 8: shows, in the same scale as that of Figure 7, a schematic perspective view of a longitudinal flow installation in an alternative embodiment having one return conduit.

In the figures, reference number 1 refers to a longitudinal flow installation according to the invention. The longitudinal flow installation 1 comprises a raceway 2, a return conduit 3, an ejector 4, a skimmer 5, deflection plates 6, and a first outlet 7.

Replacement water is conducted into the longitudinal flow installation 1 through a supply line 41 leading into an ejector housing 4. The ejector 4 is positioned in an inlet portion 31 of the return conduit 3. The replacement water is pumped into the ejector 4 by means of a pump (not shown), as known in the art. The water may be seawater, brackish water or freshwater, and it is adapted to the aquatic organism to be bred in the longitudinal flow installation 1. The ejector 4 is further provided with an air inlet 45. The air inlet 45 is positioned projecting above the water surface in the return conduit 3. A mixture of water and air will discharge at high speed from a nozzle 47 of the ejector 4 and will force water, which is located in the return conduit 3, from the ejector 4 and the inlet portion 31 towards an outlet portion 33 of the return conduit 3. Such ejectors 4 are known in the art and are not discussed in further detail. The ejector 4 will provide a good admixing of air into the water flowing through the ejector 4, and this water will be mixed properly with the other water located in the return conduit 3, whereby the water discharging from the outlet portion 33 is oxygen-rich. Stirring of the water having flowed through the ejector 4 together with the other water in the return conduit 3 further contributes to admixing of air in the water. Tests have shown that the amount of water flowing through the ejector 4 may entrain or push ahead an amount of water being 10 times larger than the amount of water flowing through the ejector 4.

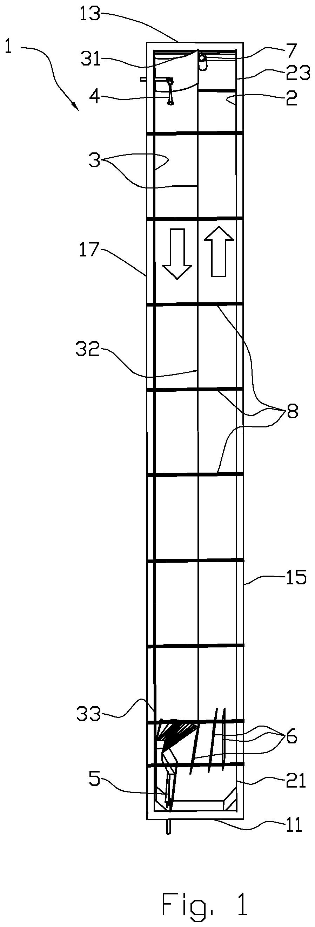

The return conduit 3 may be comprised of a tight, pliable cloth material. In an alternative embodiment, the return conduit 3 may be comprised of a stiff material which may be comprised of, for example, plastics, fibreglass or metal. The return conduit 3 may be comprised of sections or elements. In a further alternative embodiment, the return conduit may be comprised of a pipe. In the inlet portion 31 of the return conduit 3, the return conduit 3 is comprised of a water flow-through and fish-excluding portion 35. The water flow-through portion 35 may be comprised of a perforated cloth-shaped material, of a net, of a netting or of a grate. A portion of the water flow-through portion 35 is submerged in water being accommodated in the raceway 2. By so doing, the water flow generated by the ejector 4 will transport water from the outlet portion 23 of the raceway 2 and onwards to the inlet portion 21 of the raceway 2, as shown with open arrows in Figure 1.

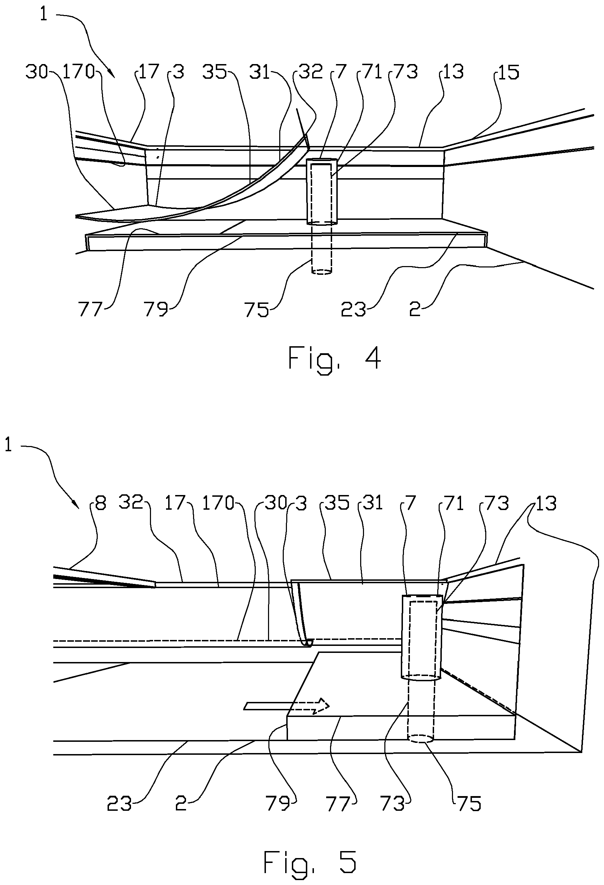

At the outlet portion 23 of the raceway 2, some water is conducted out of the longitudinal flow installation 1 through the first outlet 7. The first outlet 7 may be comprised of an outer pipe 71 and an inner pipe 73. The outer pipe 71 and the inner pipe 73 form an annulus which is in liquid-communication with the water in the raceway 2. The outer pipe 71 projects above the water surface in the raceway 2. Upon raising or lowering the inner pipe 73, the level of the water surface in the raceway 2 is determined. It is known in the art for such an outlet to be termed as a monk. Water flowing over the upper edge of the inner pipe 73 is conducted out of the longitudinal flow installation 1 through a first outlet conduit 75, see Figure 5.

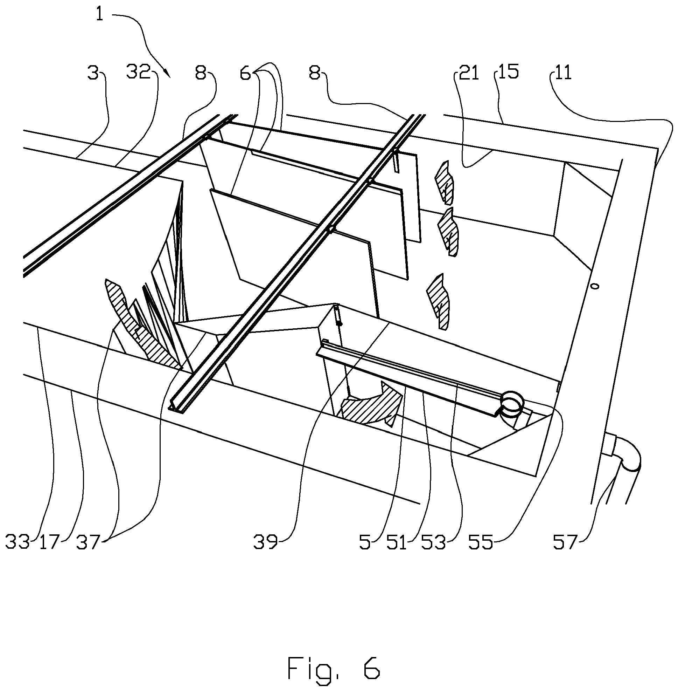

The return conduit 3 forms a constriction 37 in the outlet portion 33 thereof. A so-called skimmer 5 is positioned in the constriction 37, see Figure 6. The skimmer 5 is provided with a submerged, longitudinal and substantially horizontal portion 51 and a substantially vertically-directed wall 53 projecting up from the horizontal portion 51 and projecting above water surface of the return conduit 3. Particles and foam floating at the water surface in the return conduit 3 will be captured by the skimmer 5 and conducted to a second drain 55. The particles and the foam are conducted from the outlet 55 and out of the longitudinal flow installation 1 through a second outlet conduit 57. In the outlet portion 33 thereof, the return conduit 3 is provided with a water flow-through and organism-excluding wall 39. The water flow-through wall 39 may be comprised of a perforated cloth-shaped material, of a net, of a netting, or of a grate.

The water flowing through the constriction 37 of the return conduit 3 encounters one end wall 11 of the longitudinal flow installation 1 and is forced to deflect along the end wall 11. The return conduit 3, in the outlet portion 33 thereof, has been made deeper than the rest of the return conduit 3, whereby parts of the water flowing through the constriction 37 of the return conduit 3 will move downwards. The water will discharge through the wall 39 and into the inlet portion 21 of the raceway 2, as shown with hatched arrows in Figure 6. In order to form a substantially laminar water flow, the raceway 2, in the inlet portion 21 thereof, is provided with vertically directed deflection plates 6. The deflection plates 6, at the upper edges thereof, are releasably fixed to one or more hatch frames 8 extending across the raceway 2 and the return conduit 3 from one side wall 15 of the longitudinal flow installation 1 and to the opposite side wall 17. The hatch frames 8 are structured in a manner allowing them to support detachable or hinged hatches (not shown) which may be placed over the longitudinal flow installation 1 to protect the aquatic organisms against sunlight. The position and orientation of the deflection plates 6 may be adjusted so as to form the desirable laminar water flow over an optimum region within the raceway 2.

Figure 4 and Figure 5 show perspective views from two sides of the outlet portion 23 of the raceway 2 and the inlet portion 31 of the return conduit 3. The return conduit 3, at a first side face 30 thereof, is fixed to an inner wall 170 of the one side face 17 of the longitudinal flow installation 1. The return conduit 3, at a second side face 32 thereof, is fixed to the hatch frames 8. When the raceway 2 is filled with water, the return conduit 3 will float in the water of the raceway 2. The return conduit 3 may be comprised of a liquid-tight, cloth-shaped material. At the outlet portion 23 of the raceway 2, the longitudinal flow installation is provided with a threshold 77. The outer pipe 71 projects up from the threshold 77. The threshold 77 forms an opening 79 which is in fluid communication with the annulus between the outer pipe 71 and the inner pipe 73, as shown in Figure 5.

Aquatic organisms in the raceway 2 are prevented from swimming into or move into the return conduit 3 by virtue of the inlet portion 31 being provided with a water flow-through, organism-excluding portion 35, and by virtue of the outlet portion 33 being provided with a water flow-through, organism-excluding wall 39. The aquatic organisms may distribute themselves across the entire raceway 2. By virtue of re-circulating the water, a relatively strong current may be formed along the entire length of the raceway 2, and without increasing the water consumption. Thus, gathering of all the fish at inlet portion 21 is avoided. If the water flow is small, the most oxygen-rich water will be located at the inlet portion 21, at which location the fish will gather. The aquatic organisms may also swim or move below, and reside below, the return conduit 3, whereby breeding of aquatic organisms may take place by exploiting the entire footprint of the longitudinal flow installation 1, except for the footprint of the walls 11, 13, 15, 17.

The length and width of the return conduit 3 yield a large surface area, as shown in Figure 1. This ensures good ventilation of gases, such as CO₂ and N₂ in the water, before flowing into the raceway 2. Smaller, floating particles are removed in the skimmer 5. The relatively strong current in the raceway 2 transports particles onwards to the threshold 77, from which the particles are transported out of the longitudinal flow installation 1 via the monk 7. In this manner, a good water quality is maintained in the longitudinal flow installation 1. The water replacement rate may be, for example, between 3 and 4 hours, whereas the throughput time in the raceway 2 may be, for example, 10 to 12 minutes. The cross-sectional area of the return conduit 3 may, for example, comprise 10 % of the cross-sectional area of the raceway 2, and the throughput time in the return conduit 3 may be approximately 2 minutes. The raceway 2 may be further provided with sediment traps (not shown) along the bottom portion thereof. Such sediment traps are known in the art, and the manner in which they are emptied is known. This is not discussed in further detail.

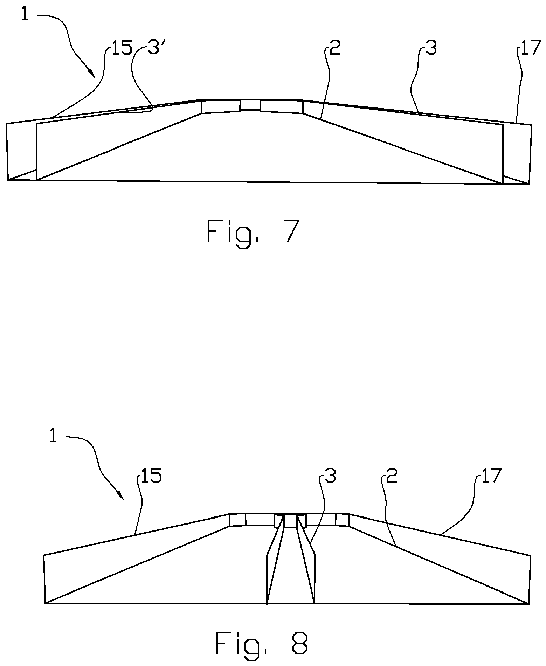

The return conduit 3 may be formed in several ways and be positioned in several ways. In Figure 7, an alternative embodiment is shown having two return conduits 3, 3' extending along the sidewalls 15, 17 of the longitudinal flow installation 1. In Figure 8, a further alternative embodiment is shown having one return conduit 3 extending along a mid-portion of the longitudinal flow installation 1.

## Claims

1. Longitudinal flow installation (1) for farming of aquatic organisms, wherein the longitudinal flow installation (1) comprises a raceway (2) and sidewalls (15, 17); wherein the raceway (2) is structured to be filled with water for allowing aquatic organisms to be accommodated; wherein the raceway (2) comprises an inlet portion (21) for water and an outlet portion (23) for water wherein a water flow is substantially laminar between the inlet portion (21) and the outlet portion (23), and the outlet portion (23) is provided with a first drain (7) for the water; wherein the longitudinal flow installation (1) is provided with a fluid supply (41, 45) for allowing oxygen to be supplied to the water, the longitudinal flow installation (1) is further provided with at least one return conduit (3) for circulation of the water in the raceway (2), wherein the return conduit (3), in an inlet portion (31) and an outlet portion (33) thereof, is provided with a submerged, water flow-through and organism-excluding element (35, 39),
**characterized in that** the return conduit (3) is positioned between the sidewalls (15, 17) of the longitudinal flow installation (1), and wherein a water surface in the return conduit (3) substantially is at a level of a water surface in the raceway (2).

2. Longitudinal flow installation (1) according to claim 1, **characterized in that** the return conduit (3) floats in the water of the raceway (2).

3. Longitudinal flow installation (1) according to claim 1 or 2, **characterized in that** the water surface in the return conduit (3) is open towards the ambient atmosphere.

4. Longitudinal flow installation (1) according to claim 1, **characterized in that** the return conduit (3) is closed, and wherein a gas pressure above the water surface in the return conduit (3) is lower than or equal to an ambient pressure.

5. Longitudinal flow installation (1) according to claim 1, **characterized in that** one side face (30) of the return conduit (3) is fixed, in a fluid-tight manner, to one of the sidewalls (15, 17) of the longitudinal flow installation (1).

6. Longitudinal flow installation (1) according to claim 1, **characterized in that** the return conduit (3) is provided with an ejector (4) to establish a water flow in the return conduit (3).

7. Longitudinal flow installation (1) according to claim 6, **characterized in that** the ejector (4) is provided with an air inlet (45) to supply air to the water.

8. Longitudinal flow installation (1) according to claim 1, **characterized in that** the return conduit (3) is provided with an inlet for replacement water (41).

9. Longitudinal flow installation (1) according to claim 1, **characterized in that** the first drain (7) comprises a monk.

10. Longitudinal flow installation (1) according to claim 1, **characterized in that** the return conduit (3), in an outlet portion (33) thereof, is provided with a skimmer (5) structured in a manner allowing it to conduct surface material to a second outlet (55).

11. Longitudinal flow installation (1) according to claim 1, **characterized in that** the raceway (2), in the inlet portion (21) thereof, is provided with at least one deflection plate (6) for generation of the laminar water flow in the raceway (2).

12. Longitudinal flow installation (1) according to claim 1, **characterized in that** the organism-excluding element (35, 39) is chosen from a group comprising a perforated cloth, a perforated plate, a net, a netting, a grate and a grating.

## Patentansprüche

1. Längsfliessinstallation (1) zur Aufzucht von Wasserorganismen, wobei die Längsfliessinstallation (1) eine Laufbahn (2) und Seitenwänden (15,17) aufweist; wobei die Laufbahn (2) so strukturiert ist, dass sie mit Wasser gefüllt werden kann, um Wasserorganismen aufzunehmen; wobei die Laufbahn (2) einen Einlassabschnitt (21) für Wasser und einen Auslassabschnitt (23) für Wasser umfasst, wobei der Auslassabschnitt (23) mit einem ersten Abfluss (7) für das Wasser versehen ist; wobei die Längsfliessinstallation (1) mit einer Fluidversorgung (41, 45) versehen ist, um dem Wasser Sauerstoff zuführen zu können,
die Längsfliessinstallation (1) ist ferner mit mindestens einer Rückführleitung (3) zur Zirkulation des Wassers in der Laufbahn (2) versehen, wobei die Rückführleitung (3), in einem Einlassabschnitt (31) und einem Auslassabschnitt (33) derselben, mit einem eingetauchten Wasserdurchfluss- und Organismusausschlusselement (35, 39) versehen ist,
**dadurch gekennzeichnet, dass** die Rückführleitung (3) zwischen den Seitenwänden (15,17) der Längsfliessinstallation (1) positioniert ist, und wobei eine Wasseroberfläche in der Rückführleitung (3) im Wesentlichen auf einem Niveau einer Wasseroberfläche in der Laufbahn (2).

2. Längsfliessinstallation (1) nach Anspruch 1, **dadurch gekennzeichnet, dass** die Rückführleitung (3) in dem Wasser der Laufbahn (2) treibt.

3. Längsfliessinstallation (1) nach Anspruch 1 oder 2, **dadurch gekennzeichnet, dass** die Wasseroberfläche in der Rückführleitung (3) zur Umgebungsatmosphäre hin offen ist.

4. Längsfliessinstallation (1) nach Anspruch 1, **dadurch gekennzeichnet, dass** die Rückführleitung (3) geschlossen ist, und wobei der Gasdruck oberhalb der Wasseroberfläche in der Rückführleitung (3) kleiner oder gleich dem Umgebungsdruck ist.

5. Längsfliessinstallation (1) nach Anspruch 1, **dadurch gekennzeichnet, dass** eine Seitenfläche (30) der Rückführleitung (3) in einer fluiddichten Weise an einer der Seitenwände (15, 17) der Längsfliessinstallation (1) fixiert ist.

6. Längsfliessinstallation (1) nach Anspruch 1, **dadurch gekennzeichnet, dass** die Rückführleitung (3) mit einem Strömungserzeuger (4) versehen ist, um einem Wasserfluss in der Rückführleitung (3) zu erzeugen.

7. Längsfliessinstallation (1) nach Anspruch 6, **dadurch gekennzeichnet, dass** der Strömungserzeuger (4) mit einer Luftzufuhr (45) versehen ist, um Luft in das Wasser einzuspeisen.

8. Längsfliessinstallation (1) nach Anspruch 1, **dadurch gekennzeichnet, dass** die Rückführleitung (3) mit einem Einlass für Ersatzwasser (41) versehen ist.

9. Längsfliessinstallation (1) nach Anspruch 1, **dadurch gekennzeichnet, dass** der erste Abfluss (7) einen Mönch umfasst.

10. Längsfliessinstallation (1) nach Anspruch 1, **dadurch gekennzeichnet, dass** die Rückführleitung (3) in ihrem Auslassabschnitt (33) mit einem Skimmer (5) versehen ist, der auf eine Art strukturiert ist, welche ihm erlaubt Oberflächenmaterial zu einem zweiten Auslass (55) zu leiten.

11. Längsfliessinstallation (1) nach Anspruch 1, **dadurch gekennzeichnet, dass** die Laufbahn (2) in ihrem Einlassabschnitt (21) mit mindestens einer Umlenkplatte (6) zur Erzeugung eines laminaren Wasserstroms in der Laufbahn (2) versehen ist.

12. Längsfliessinstallation (1) nach Anspruch 1, **dadurch gekennzeichnet, dass** das Organismusausschlusselement (35, 39) aus einer Gruppe ausgewählt ist, welche ein perforiertes Tuch, eine perforierte Platte, ein Netz, ein Geflecht, einen Rost und ein Gitter umfasst.

## Revendications

1. Une installation à écoulement longitudinal (1) pour la culture d'organismes aquatiques, où l'installation à écoulement longitudinal (1) comprend une piste (2) et des parois latérales (15, 17);
où la piste (2) est structurée de façon à être remplie par de l'eau pour permettre aux organismes aquatiques d'y être reçus ; où la piste (2) comprenant une partie d'entrée (21) pour de l'eau et une partie de sortie (23) pour de l'eau, **où l'écoulement d'eau** est sensiblement **laminaire entre la partie d'entrée (21) et** la partie de sortie (23), et la partie de sortie (23) est **munie d**'un premier drain (7) pour l'eau; et **où l**'installation à écoulement longitudinal (1) est munie d'une alimentation en fluide (41, 45) pour permettre à de l'oxygène d'être délivré à l'eau, l'installation à écoulement longitudinal (1) **de plus est munie d**'au moins un conduit de retour (3) pour la circulation de l'eau dans la piste (2), où le conduit de retour (3), dans une partie d'entrée (31) et une partie de sortie (33) de celui-ci, est muni d'un élément submergé à écoulement d'eau traversant et à exclusion d'organismes (35, 39),
**caractérisée en ce que** le conduit de retour (3) est positionné entre les parois latérales **(15. 17) de l**'installation à écoulement longitudinal (1), **et où une surface d'eau dans le conduit de retour (3) est sensiblement à un niveau d'une surface d'eau dans la piste (2).**

2. Une installation à écoulement longitudinal (1) selon la revendication 1, **caractérisée en ce que** le conduit de retour (3) flotte dans l'eau de la piste (2).

3. Une installation à écoulement longitudinal (1) selon la revendication 1 ou 2, **caractérisée en ce que** la surface d'eau dans le conduit de retour (3) est ouverte envers l'atmosphère ambiante.

4. Une installation à écoulement longitudinal (1) selon la revendication 1, **caractérisée en ce que** le conduit de retour (3) est fermé, et/ou une pression de gaz au-dessus de la surface d'eau dans le conduit de retour (3) est inférieure ou égale à la pression ambiante.

5. Une installation à écoulement longitudinal (1) selon la revendication 1, **caractérisée en ce que** une face latérale (30) du conduit de retour (3) est fixée, de manière étanche aux fluides, à une des parois latérales (15, 17) de l'installation à écoulement longitudinal (1).

6. Une installation à écoulement longitudinal (1) selon la revendication 1, **caractérisée en ce que** le conduit de retour (3) est muni d'un éjecteur (4) pour établir un flux d'eau dans le conduit de retour (3).

7. Une installation à écoulement longitudinal (1) selon la revendication 6, **caractérisée en ce que** le générateur de flux (4) est muni d'une entrée d'air (45) pour alimenter l'eau en air.

8. Une installation à écoulement longitudinal (1) selon la revendication 1, **caractérisée en ce que** le conduit de retour (3) est muni d'une entrée **pour de l'eau de remplacement.**

9. Une installation à écoulement longitudinal (1) selon la revendication 1, **caractérisée en ce que** le premier drain (7) comprend un moine.

10. Une installation à écoulement longitudinal (1) selon la revendication 1, **caractérisée en ce que** le conduit de retour (3), dans une partie de sortie (33) de celui-ci, **et muni d'une** écumoire (5) structurée de manière à lui permettre de guider du matériel de surface vers une deuxième sortie (55).

11. Une installation à écoulement longitudinal (1) selon la revendication 1, **caractérisée en ce que** la piste (2), dans la partie d'entrée (21) de celle-ci, est munie **d'au moins une** plaque de déflection (6) **pour générer l'écoulement d'eau** laminaire dans la piste (2).

12. Une installation à écoulement longitudinal (1) selon la revendication 1, **caractérisée en ce que** l'élément à **exclusion d**'organismes (35, 39) et choisi du groupe comprenant un drap perforé, une plaque perforée, un filet, un treillis, une grille et un grillage.
